# EUROPEAN PATENT APPLICATION

(11) **EP 4 801 179 A1**
(43) Date of publication of application: **02.09.2026**
(21) Application number: 26151569.6
(22) Date of filing: 13.01.2026
(51) Int. Cl.: H04W 74/0816, H04W 74/0833, H04W 74/00

(54) **METHOD AND APPARATUS FOR BACKOFF COUNTER SELECTION FOR PRIORITIZED ENHANCED DISTRIBUTION CHANNEL ACCESS CONTENTION**

(30) Priority: 28.02.2025 US 202519067664
(71) Applicant: Nokia Technologies Oy, 02610 Espoo (FI)
(72) Inventor: LIUBOGOSHCHEV, Mikhail, Munich (DE); VARSHNEY, Prabodh, Irving (US); JOHNSSON, Kerstin, Palo Alto (US); TALARICO, Salvatore, Sunnyvale (US)
(74) Representative: Nokia EPO representatives

(57) **Abstract**

Described herein are apparatuses, methods, and computer program products for low latency STAs to select the backoff counters in such a way that can reduce collisions during the P-EDCA contention. An adaptive contention technique is employed that reduces the probability of collisions, while maintaining fair access to the channel and limiting overhead. Each low latency STA may initially obtain a distinct probability distribution for the backoff counter selection with a contention slot selected based on the probability distribution. The selected slot may be transformed, such as by being permutated, to produce the backoff counter to be used by a low latency STAs.

## Description

### TECHNICAL FIELD

Various example embodiments relate generally to communication systems and, more particularly, to wireless network functionality related to prioritizing data traffic for a communication network.

### BACKGROUND

Wireless communication networks, such as Wi-Fi networks, may support latency-sensitive applications at Wi-Fi stations (STAs). Such latency-sensitive applications may include virtual reality (VR) applications, mixed reality (MR) applications, augmented reality (AR) applications, extended reality (XR) applications, or applications that utilize sensors which detect events to be reported with low latency. However, in some cases, the default backoff procedures of a wireless communication network may constrain the performance of the latency-sensitive applications and/or the wireless communication network.

### BRIEF DESCRIPTION

According to some aspects, there is provided the subject matter of the independent claims. Some further aspects are defined in the dependent claims. The embodiments that do not fall under the scope of the claims are to be interpreted as examples useful for understanding the disclosure.

In an example embodiment, an apparatus is provided that includes at least one processor and at least one memory storing instructions, wherein the instructions, when executed by the at least one processor, cause the apparatus to initialize a first slot selection probability distribution for backoff counter selection within a first contention window. The instructions, when executed by the at least one processor, additionally cause the apparatus to select a first contention slot within the first contention window based upon the first slot selection probability distribution. The instructions, when executed by the at least one processor, also cause the apparatus to contend to transmit data traffic via the first contention slot that was selected using prioritized enhanced distributed channel access (P-EDCA). The instructions, when executed by the at least one processor, further cause the apparatus to determine a second slot selection probability distribution based on contention to transmit via the first contention slot that was selected.

In one or more embodiments, the instructions, when executed by the at least one processor, additionally cause the apparatus to select a second contention slot within the second contention window based upon the second slot selection probability distribution and to contend to transmit data traffic via the second contention slot that was selected using P-EDCA. In one or more embodiments, the instructions, when executed by the at least one processor, additionally cause the apparatus to initialize the first slot selection probability distribution across a width (CW) of the first contention window. In one or more embodiments, the apparatus is caused to initialize the first slot selection probability distribution in response to at least one of receiving an acknowledgement by the apparatus, failure to contend continuously, a response to a state change including at least one of a reassociation, roaming, a change in operational mod, or a request from a second apparatus.

In an instance in which contention was successful and data traffic was transmitted via the selected contention slot, the second slot selection probability of the selected contention slot within a second contention window may be increased, and the selection probability of other contention slots within the second contention window may be decreased. In one or more embodiment, in an instance in which contention failed and data traffic was not transmitted via the selected contention slot, the second selection probability of the selected contention slot within a second contention window may be decreased, and the selection probability of other contention slot within the second contention window may be increased. In one or more embodiments, the second probability distribution for slot j in which contention was successful is determined as: ${p}_{ij} = {p}_{ij} + min \left(Δ, {\sum }_{k \neq j} min \left(\frac{Δ}{\left(CW\right)}, {p}_{ik}\right)\right)$

In one or more embodiments, the second probability distribution for slot j in which contention failed is determined as: ${p}_{ij} = {p}_{ij} - min \left({p}_{ij}, Δ\right) .$

In one or more embodiments, the second probability distribution in which contention failed is determined based on a predefined update probability to decrease the second selection probability of the selected contention slot within the second contention window.

The second slot selection probability distribution may be adjusted based on contention parameters. In one or more embodiments, the second probability distribution in which contention was successful is determined as: *pᵢⱼ* = *pᵢⱼ* + *β* and the second probability distribution in which contention failed is determined as: *pᵢⱼ* = *pᵢⱼ* * (1-*α*). In one or more embodiments, the contention parameters are at least one of a predefined value or a value configured by the second apparatus.

In one or more embodiments, the instructions, when executed by the at least one processor, cause the apparatus to adjust the slot selection probability distribution such that a probability to select the contention slot is dynamically changed over time in accordance with a first predefined relationship in response to a successful contention to transmit the data traffic via the contention slot that was selected and in accordance with a second predefined relationship, different than the first predefined relationship, in response to an unsuccessful contention to transmit the data traffic via the contention slot that was selected.

The instructions, when executed by the at least one processor, may cause the apparatus to apply a permutation to contention slots within a contention window. In one or more embodiments, the permutation to the contention slots within a contention window is based on an initialization parameter. In one or more embodiments, the initialization parameter comprises at least one of a parameter broadcasted by an access point, a duration of a transmission opportunity, or a length of a PHY protocol data unit. In one or more embodiments, the permutation is based upon a pseudorandom permutation operator derived from at least one of a time synchronization function (TSF) timer value, a slot index, a function of TSF timer value, a parameter of a transmission opportunity, or a common synchronized clock reference available via a Timing Measurement and Fine Timing Measurement.

In one or more embodiments, the instructions, when executed by the at least one processor, may cause the apparatus to convert the TSF timer value to milliseconds. In one or more embodiments, the instructions, when executed by the at least one processor, may cause the apparatus to use an integer part of the TSF timer value, as converted, to permutate the contention slot that was selected.

In an example embodiment, a method is provided that includes initializing a first slot selection probability distribution for backoff counter selection within a first contention window. The method additionally comprises selecting a first contention slot within the first contention window based upon the first slot selection probability distribution. The method also comprises contending to transmit data traffic via the first contention slot that was selected using prioritized enhanced distributed channel access (P-EDCA) and determining a second slot selection probability distribution based on contention to transmit via the first contention slot that was selected.

In another example embodiment, a non-transitory computer-readable storage medium is provided that includes program instructions stored thereon that are configured to initialize a first slot selection probability distribution for backoff counter selection within a first contention window. The non-transitory computer-readable storage medium additionally includes program instructions stored thereon that are configured to select a first contention slot within the first contention window based upon the first slot selection probability distribution and to contend to transmit data traffic via the first contention slot that was selected using prioritized enhanced distributed channel access (P-EDCA). The non-transitory computer-readable storage medium also includes program instructions stored thereon that are configured to determine a second slot selection probability distribution based on contention to transmit via the first contention slot was selected.

In another example embodiment, an apparatus is provided that includes means for initializing a first slot selection probability distribution for backoff counter selection within a first contention window and means for selecting a first contention slot within the first contention window based upon the first slot selection probability distribution. The apparatus additionally includes means for contending to transmit data traffic via the first contention slot that was selected using prioritized enhanced distributed channel access (P-EDCA) and means for determining a second slot selection probability distribution based on contention to transmit via the first contention slot that was selected.

In an example embodiment, an apparatus is provided that includes at least one processor and at least one memory storing instructions, wherein the instructions, when executed by the at least one processor, cause the apparatus to obtain an assigned contention slot within a contention window and to transform the assigned contention slot to a transformed contention slot within the contention window. The instructions, when executed by the at least one processor, additionally cause the apparatus to contend to transmit data traffic via the transformed contention slot within the contention window, using prioritized enhanced distributed channel access (P-EDCA).

In one or more embodiments, the assigned contention slot is configured statically or semi-statically from a second apparatus. The instructions, when executed by the at least one processor, may additionally cause the apparatus to initialize a first slot selection probability distribution for backoff counter selection within the contention window. In one or more embodiments, the instructions, when executed by the at least one processor, additionally cause the apparatus to obtain the assigned contention slot by selecting a first contention slot within the contention window based upon the first slot selection probability distribution, wherein the first contention slot is then transformed to the transformed contention slot. In one or more embodiments, the instructions, when executed by the at least one processor, may additionally cause the apparatus to determine a second slot selection probability distribution based on the contention to transmit via the transformed contention slot. In an instance in which contention was successful and data traffic was transmitted via the transformed contention slot, the second slot selection probability of the first contention slot within a second contention window may be increased, and the selection probability of other contention slots within the second contention window may be decreased. In an instance in which contention failed and data traffic was not transmitted via the transformed contention slot, the second selection probability of the first contention slot within a second contention window may be decreased, and the selection probability of other contention slots within the second contention window may be increased.

In one or more embodiments, the instructions, when executed by the at least one processor, additionally or alternatively cause the apparatus to adjust the first or second slot selection probability distribution such that a probability to select the contention slot is dynamically changed over time in accordance with a first predefined relationship in response to a successful contention to transmit the data traffic via the transformed contention slot and in accordance with a second predefined relationship, different than the first predefined relationship, in response to an unsuccessful contention to transmit the data traffic via the transformed contention slot.

In one or more embodiments, the second probability distribution in which contention for slot j was successful is determined as: *pᵢⱼ* = *pᵢⱼ* + *β* and the second probability distribution in which contention for slot j failed is determined as: *pᵢⱼ* = *pᵢⱼ* * (1 - *α*). In one or more embodiments, the assigned contention slot is configured within a setup procedure corresponding to data traffic of the apparatus. The setup procedure may comprise at least one of a stream classification service (SCS), a mirrored stream classification service (MSCS) or a traffic specification (TSPEC) setup procedure. In one or more embodiments, the assigned contention slot is between zero and the width of the contention window. The width of the contention window may be fixed or configured by the second apparatus. In one or more embodiments, the assigned contention slot is selected based on a probability distribution. In an embodiment in which the assigned contention slot is derived from a function parameter, the function parameter comprises at least one of an Association Identifier (AID) or a media access control (MAC) address.

In one or more embodiments, the instructions, when executed by the at least one processor, additionally cause the apparatus to transform the assigned contention slot by permutating the assigned contention slot within the contention window. In this embodiment, permutating the assigned contention slot may comprise permutating the assigned contention slot utilizing a permutation operator. In one or more embodiments, the permutation operator comprises a pseudorandom permutation operator. For example, the permutation operator may be derived from at least one of the following a time synchronization function (TSF) timer value, a slot index, a function of TSF timer value, a parameter of a transmission opportunity, a parameter of a physical layer (PHY) protocol data unit (PPDU), or a common synchronized clock reference available via a timing measurement and fine timing measurement. The parameter of a transmission opportunity may be the duration of the transmission opportunity in milliseconds. The parameter of a previous PDU may be a length of the previous PDU measured in bits or bytes. The function of TSF timer value may be a linear transformation of the TSF timer value using a parameter configured by the second apparatus or based on the parameter of a transmission opportunity. The TSF timer value may be converted in milliseconds and an integer part of the TSF timer value, as converted, may be used as the permutation operator. In one or more embodiments, obtaining the assignment of the contention slot is performed so as to provide for unique slot assignment with assignment of a different contention slot for each of one or more stations.

In an example embodiment, a method is provided that includes obtaining an assigned contention slot within a contention window and transforming the assigned contention slot to a transformed contention slot within the contention window. The method additionally comprises contending to transmit data traffic via the transformed contention slot within the contention window, using prioritized enhanced distributed channel access (P-EDCA).

In another example embodiment, a non-transitory computer-readable storage medium is provided that includes program instructions stored thereon that are configured to obtain an assigned contention slot within a contention window and transform the assigned contention slot to a transformed contention slot within the contention window. The non-transitory computer-readable storage medium additionally includes program instructions stored thereon that are configured to contend to transmit data traffic via the transformed contention slot within the contention window, using prioritized enhanced distributed channel access (P-EDCA).

In another example embodiment, an apparatus is provided that includes means for obtaining an assigned contention slot within a contention window and means for transforming the assigned contention slot to a transformed contention slot within the contention window. The apparatus additionally includes means for contending to transmit data traffic via the transformed contention slot within the contention window, using prioritized enhanced distributed channel access (P-EDCA).

In an example embodiment, an apparatus is provided that includes at least one processor and at least one memory storing instructions, wherein the instructions, when executed by the at least one processor, cause the apparatus to assign a contention slot within a contention window to one or more stations and to configure a parameter for transforming the assigned contention slot to a transformed contention slot within the contention window. The instructions, when executed by the at least one processor, additionally cause the apparatus to transmit an indication of the contentions slot that was assigned and the parameter to a station and to receive data traffic via the transformed contention slot within the contention window from the station, using prioritized enhanced distributed channel access (P-EDCA).

In an example embodiment, the contention slot assignment occurs statically or semi-statically. The parameter for transforming the assigned contention slot may be at least one of a time synchronization function (TSF) timer value; a slot index; a function of TSF timer value; a parameter of a transmission opportunity; a parameter of a physical layer (PHY) protocol data unit (PPDU); or a common synchronized clock reference available via a timing measurement and fine timing measurement. In an example embodiment, the contention slot assignment occurs within a setup procedure corresponding to data traffic of the apparatus. In this embodiment, the setup procedure may include at least one of a stream classification service (SCS), a mirrored stream classification service (MSCS) or a traffic specification (TSPEC) setup procedure. The assigned contention slot may be between zero and the width of the contention window. In an example embodiment, the width of the contention window is fixed or dynamically configurable. The apparatus may be further caused to define the width of the contention window. In an example embodiment, the assigned contention slot is a function of a unique identifier associated with the station, the unique identifier comprises at least one of an Association Identifier (AID) or a media access control (MAC) address.

In an example embodiment, a method is provided that includes assigning a contention slot within a contention window to one or more stations and configuring a parameter for transforming the assigned contention slot to a transformed contention slot within a contention window. The method additionally comprises transmitting an indication of the contentions lot that was assigned and the parameter to a station and receiving data traffic via the transformed contention slot within the width of the contention window from the station, using prioritized enhanced distributed channel access (P-EDCA).

In another example embodiment, a non-transitory computer-readable storage medium is provided that includes program instructions stored thereon that are configured to assign a contention slot within a contention window to one or more stations and to configure a parameter for transforming the assigned contention slot to a transformed contention slot within a contention window. The non-transitory computer-readable storage medium additionally includes program instructions stored thereon that are configured to transmit an indication of the contentions lot that was assigned and the parameter to a station and receive data traffic via the transformed contention slot within the width of the contention window from the station, using prioritized enhanced distributed channel access (P-EDCA).

In yet another example embodiment, an apparatus is provided that includes means for assigning a contention slot within a contention window to one or more stations and means for configuring a parameter for transforming the assigned contention slot to a transformed contention slot within the contention window. The apparatus additionally includes means for transmitting an indication of the contentions slot that was assigned and the parameter to a station and means for receiving data traffic via the transformed contention slot within the contention window from the station, using prioritized enhanced distributed channel access (P-EDCA).

### BRIEF DESCRIPTION OF THE DRAWINGS

Having thus described certain example embodiments of the present disclosure in general terms, reference will now be made to the accompanying drawings, which are not necessarily drawn to scale, and wherein:
Figure 1 illustrates example transmissions in accordance with a legacy enhanced distribution channel access (EDCA) procedure;
Figure 2 illustrates example transmissions in accordance with a scalable contention-based approach;
Figure 3 depicts an example communication system in which one or more example embodiments of the present disclosure may be performed;
Figure 4 is a block diagram of an apparatus configured in accordance with one or more example embodiments of the present disclosure;
Figure 5 illustrates example probabilities for slot selection without modifications to the backoff counter selection;
Figure 6 illustrates example probabilities for slot selection in accordance with one or more example embodiments of the present disclosure;
Figure 7 illustrates a flowchart illustrating operations performed, such as by the apparatus of Figure 4, in order to enable different stations to select distinct contention slots for prioritized enhanced distributed channel access contention, in accordance with one or more example embodiments of the present disclosure;
Figure 8 illustrates another flowchart illustrating operations performed, such as by the apparatus of Figure 4, in order to enable the assignment of distinct contention slots to different stations for prioritized enhanced distributed channel access contention, in accordance with one or more other example embodiments of the present disclosure; and
Figure 9 illustrates an example signaling flow diagram in accordance with one or more example embodiments of the present disclosure.

### DETAILED DESCRIPTION

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. Further, when a particular feature, structure, or characteristic is described in connection of an embodiment, it is within the knowledge of one skilled in the art to apply such feature, structure, or characteristic in connection with other embodiments whether or not explicitly described. It shall be understood that although the terms "first," "second" and the like may be used herein to describe various elements, these elements should not be limited by these terms. These terms are only used to distinguish one element from another.

For the purposes of the present disclosure, the phrases "at least one of A or B", "at least one of A and B", and "A and/or B" means any, some or all of the following instances: (A), (B), or (A and B). For the purposes of the present disclosure, the phrase "A, B, and/or C" means any, some or all of the following instances: (A), (B), (C), (A and B), (A and C), (B and C), or (A, B, and C).

Some embodiments of the present disclosure will now be described more fully hereinafter with reference to the accompanying drawings, in which some, but not all, embodiments of the present disclosure are shown. Indeed, various embodiments of the present disclosure may be embodied in many different forms and should not be construed as limited to the certain embodiments set forth herein; rather, these certain embodiments are provided so that this disclosure will satisfy applicable legal requirements. Like reference numerals refer to like elements throughout.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device (such as a core network apparatus), field programmable gate array, and/or other computing device.

As used herein, the terms "data," "content," "information," and similar terms may be used interchangeably to refer to data capable of being transmitted, received and/or stored in accordance with an embodiment of the present disclosure. Thus, use of any such terms should not be taken to limit the spirit and scope of one or more embodiments of the present disclosure.

A communications system may be deployed in a wireless local area network (e.g., WLAN, Wi-Fi, etc.), for example, based on IEEE 802.11 standards and/or related drafts, such as 802.11-2020, 802.11ac, 802.11ax, 802.11be, 802.11bn, and/or others. That is, the system may be an example of a WLAN system. The WLAN system may support wireless communications between one or more communications devices in accordance with one or more Wi-Fi protocols. In some examples, Wi-Fi communications may occur via one or more radio frequency bands, such as about a 2.4 GHz radio frequency band, a 5GHz radio frequency band, a 6GHz radio frequency band, and/or another radio frequency band. In some such examples, each radio frequency band may support one or more channels over which data may be communicated. In some examples, multiple devices may use multiple channels to communicate over the WLAN simultaneously.

A WLAN system may include one or more communications devices, such as one or more access points (APs) and/or one or more non-AP stations (STAs). That is, a device configured to support one or more Wi-Fi protocols may be an example of an AP (e.g., may operate in accordance with an AP mode) and/or may be an example of a STA (e.g., may operate in accordance with a non-AP STA mode). In some examples, an AP may control Wi-Fi communications for one or more non-AP STAs. For example, an AP may be (or may be connected to) a central entity used to establish (and/or control) one or more connections between one or more non-AP STAs and another network (e.g., the Internet). In other words, in some examples, the AP may connect a wired network (e.g., the Internet) to a wireless network (e.g., the WLAN). In some instances, a Wi-Fi network may be identified via one or more identifiers, such as a service set identifier (SSID).

A WLAN system may support one or more architectures (types of logical relationships between devices). For example, a WLAN system may support an autonomous architecture, a centralized architecture, a cooperative architecture, and/or other types of architectures. In some examples of an autonomous architecture, APs are stand-alone APs configured with features and capabilities to operate without any reliance on another device. In some examples of a centralized architecture, a centralized network manager may regulate the operation of the WLAN. In other words, the network manager may be the AP or may be connected to one or more APs within the WLAN. For example, APs may be connected (e.g., wirelessly and/or via a wired connection) to a central entity which may be configured to act as a network manager. In some examples, the network manager is an entity in cloud-based entity which may reside either in private cloud or in public cloud. In some examples of a cooperative architecture (also referred to as a network manager-less or controller-less architecture), a virtual management (e.g., cloud-based) system may be used to control a WLAN. For example, the virtual management system may employ a cooperative communication method between one or more APs to control the WLAN. In other examples, a centralized network manager may use a wireless system to provide local connection to clients (e.g., STAs). For example, the centralized network manager may be a controller configured to perform operations related to authentication, authorization, accounting (e.g., via an authentication, authorizing, and accounting (AAA) server), and/or other operations.

Additionally, or alternatively, a WLAN system may support one or more topologies (types of physical connections between various devices within the WLAN system). For example, the WLAN system may support an infrastructure topology which may include a combination of wired and wireless connections. In some examples of an infrastructure topology, the infrastructure topology may include one or more wired devices with a wired connection to a network (e.g., one or more APs that are each connected via a cable to a switch) and the one or more wired devices may support one or more wireless connections to one or more wireless devices (e.g., laptops, tablets, cell phones), such that the wireless devices may connect wirelessly to the network. In other words, the one or more wired devices may serve as a bridge between the wireless network and the wired network. Additionally, or alternatively, the WLAN system may support an ad hoc topology, which does not rely on infrastructure (e.g., cables, routers, servers, or APs). In some examples of an ad hoc network, one or more non-AP STAs (also referred to as clients) may wirelessly connect to other devices in a peer-to-peer network. Additionally, or alternatively, the WLAN system may support a mesh topology in which multiple network devices are interconnected with each other via wireless connections. For example, in accordance with a mesh topology, an AP (e.g., each AP), which may support one or more wireless connections with one or more STAs, may communicate wirelessly with one or more other APs.

In accordance with one or more Wi-Fi protocols, data may be transmitted wirelessly between two devices (e.g., an AP and a non-AP STA) via packets, referred to as protocol data units (PDUs). In other words, Wi-Fi communications may include transmission and reception of one or more PDUs. For example, data may be communicated via a frame (e.g., a medium access control (MAC) frame), which may include one or more PDUs. In some instances, multiple frames may include the same PDU. In some examples, a PDU may include data (referred to as a payload), as well as one or more headers (e.g., a sequence of one or more fields) and/or one or more trailers (e.g., a sequence of bits appended to the PDU, after the payload). In some examples, the data included in the PDU, may be user data, control data, management data, and/or other types of data. In some examples, frames may include data type frames, control type frames, management type frames, and/or other types of frames. At least one frame type (e.g., each frame type) may be included in a PDUs, wherein a payload of a PDU may comprise user data, control data, management data, and/or other data. In some examples, a WLAN system may implement one or more security protocols to protect the confidentiality, integrity, and availability of Wi-Fi communications.

A WLAN system may be configured with various types of services sets, for example, such as basic service set (BSS) and/or an extended service set (ESS). A BSS may be comprised of an AP and one or more client devices (e.g., non-AP STAs) associated with the AP. The one or more client devices may have one or more common PHY medium access characteristics (e.g., radio frequency, modulation scheme, security settings, and/or the like). A BSS identifier (BSSID) may define the BSS such that the one or more client devices of the BSS share the same BSSID.

A communication network such as a WLAN may support latency-sensitive applications at Wi-Fi stations (STAs). Such latency-sensitive applications may include virtual reality (VR) applications, mixed reality (MR) applications, augmented reality (AR) applications, and extended reality (XR) applications. Latency-sensitive applications may also include applications that utilize sensors which detect events to be reported with low latency. However, in some cases, default procedures for channel access of a communication network (e.g., a WLAN) may constrain performance of the latency-sensitive applications and/or the communication network. For example, low latency support may involve delivering frames with low latency for APs and non-AP STAs. To support low latency traffic, a channel access procedure for a communication network may be modified to provide higher priority access to STA(s) with low latency traffic. As an example, some Wi-Fi devices utilize a Carrier Sense Multiple Access with Collision Avoidance (CSMA/CA) protocol which relies on a backoff mechanism to manage access to a shared wireless channel.

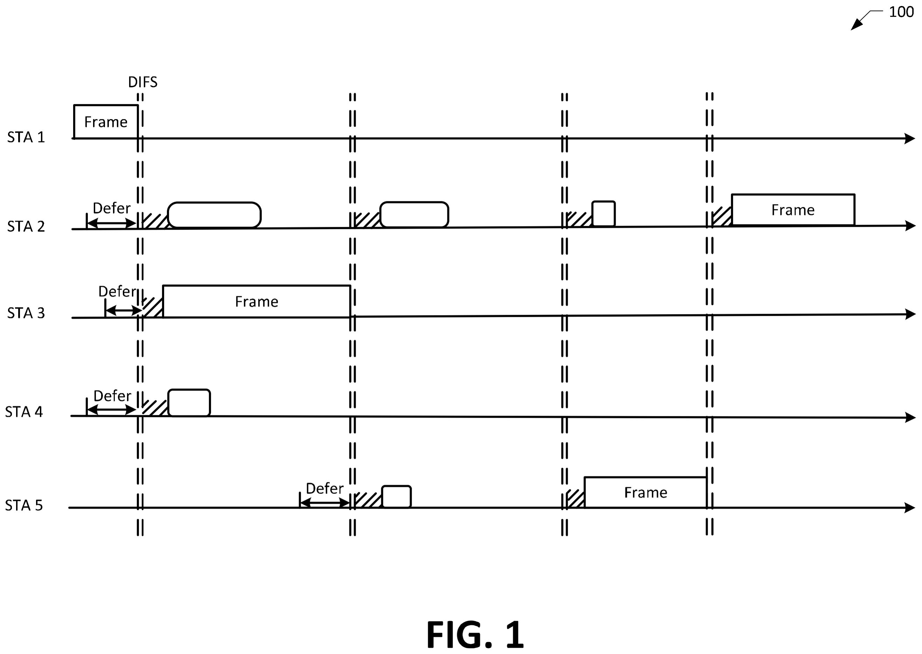

Figure 1 illustrates example transmissions in accordance with a legacy enhanced distribution channel access (EDCA) procedure. In one example, a STA which has completed its transmission selects a random backoff time. Regardless of the state of its transmit buffer, a STA decrements the backoff counter when the channel is free and pauses it when the channel is busy. If the STA receives data to transmit before the backoff timer reaches zero, it will initiate a transmit opportunity (TxOP) immediately once the backoff timer reaches zero. However, if the STA receives data after the backoff counter has reached zero, it can transmit immediately if the channel is free. With reference to Figure 1, for example, STA1 is shown to transmit data in the first time period, STA3 is shown to transmit data in the second time period, STA5 is shown to transmit data in the fourth time period and STA2 is shown to transmit data in the fifth time period,, If the channel is busy, the STA must restart the backoff procedure as shown to occur for STA2 and STA4 in the second time period, for STA2 and STA 5 in the third time period and for STA2 in the fourth time period.

In some examples, a contention window (CW) may be utilized to support low latency traffic. When multiple devices request to transmit data at the same time, each device may select a random backoff time from a defined range called the contention window. Typically, for each access category (AC) there is a minimum Contention Window (CW_min) and a maximum Contention Window (CW_max). For example, Access Category Voice (AC_VO) may be the highest priority access category and the CW_min may be set to 1/4th of CW_min for best effort traffic associated with data traffic where priority is not critical (e.g., web browsing, email, etc.) or background traffic associated with data traffic for low-priority background tasks (e.g., downloading content, etc.). In other examples, exponential backoff may be utilized. For instance, if a collision occurs (e.g., multiple devices transmit simultaneously), the contention window size may be increased exponentially (e.g., increased by 2x until CW_max is reached) for each subsequent transmission attempt, thereby providing more time for other devices to transmit data and reducing the likelihood of further collisions. In other examples, randomization may be utilized. For instance, the random selection of the backoff time within the contention window may be utilized to minimize synchronized transmission attempts from multiple devices, further preventing collisions.

In some examples, a communication network such as a WLAN may utilize an enhanced distributed channel access (EDCA) procedure to support low latency traffic. For example, an EDCA procedure may be utilized to provide preferential wireless channel access for voice data, video data, and/or other quality of service (QoS) data associated with low latency applications. Current EDCA procedures enables an advantage to Access Category Voice (AC_VO) traffic by setting the CW_min and CW_max value to a lower value compared to other data traffic such as Access Category Video (AC_VI) traffic, Access Category Best Effort (AC_BE) traffic, and Access Category Background (AC_BK) traffic. However, if a transmission is not successful, a STA typically increases the contention window size by a factor of two. However, for low latency traffic, the exponential increase in contention window size provides a disadvantage to a low latency STA that experiences failed transmissions due to for example collisions of sent packets as compared to other STAs which may include another type of data traffic, thereby increasing experienced tail latency associated with the communication network. As such, it may be desirable to improve current EDCA procedures to enable a STA with prioritized data traffic such as low latency traffic to obtain prioritized access to a data channel of a communication network.

Several prioritized-EDCA (P-EDCA) schemes have been proposed to enhance channel access for STAs handling low latency traffic. These proposals introduce mechanisms that allow low latency STAs to reserve the channel by transmitting a "defer Signal" (DS) when the channel transitions from busy to idle, followed by a prioritized channel contention procedure. A DS frame makes non-low latency STAs yield/defer until the related channel reservation period is over. This approach prevents non-low latency STAs from competing for the channel. However, there is no guarantee that DS transmissions will succeed, nor that low latency STAs will detect when DS collisions occur. Thus, low latency STAs will act as if a collision occurred and immediately initiate a contention procedure after the DS transmission. The DS transmission(s) defines and protects the proceeding P-EDCA contention period. After one of the low latency STAs wins the contention, it would transmit its data, and the remaining STAs would have to repeat the procedure from the beginning, e.g., from sending DSs. Due to P-EDCA's limited contention period duration, STAs must adopt aggressive contention parameters, such as a reduced CW and shorter AIFS. While this approach prioritizes low latency STAs, it significantly limits scalability, as many STAs attempting to contend within this narrow time frame increases collision probability and wastes channel resources.

Several proposals have been introduced to address this scalability challenge including threshold-based access control and scalable contention-based approach. During threshold-based access control, the AP broadcasts P-EDCA control information, including an operational parameter. The operational parameter determines whether P-EDCA is enabled (e.g., Zero = Disabled, Non-zero = Enabled). The AP dynamically adjusts the parameter to control the number of participating P-EDCA STAs. Each STA randomly selects a parameter value (e.g., 3 in the range 1 - 7). The STA compares its selected value (e.g., 3) to the AP's threshold (e.g., 5). If the STA's value is lower than the AP's threshold (e.g., 3 < 5), the STA accesses the channel via P-EDCA; otherwise, the STA uses standard EDCA. While this method offers dynamic control over channel access, this method introduces substantial overhead due to frequent AP parameter adjustments. Furthermore, the fixed threshold restricts scalability and may cause unnecessary delays when the number of STAs is low.

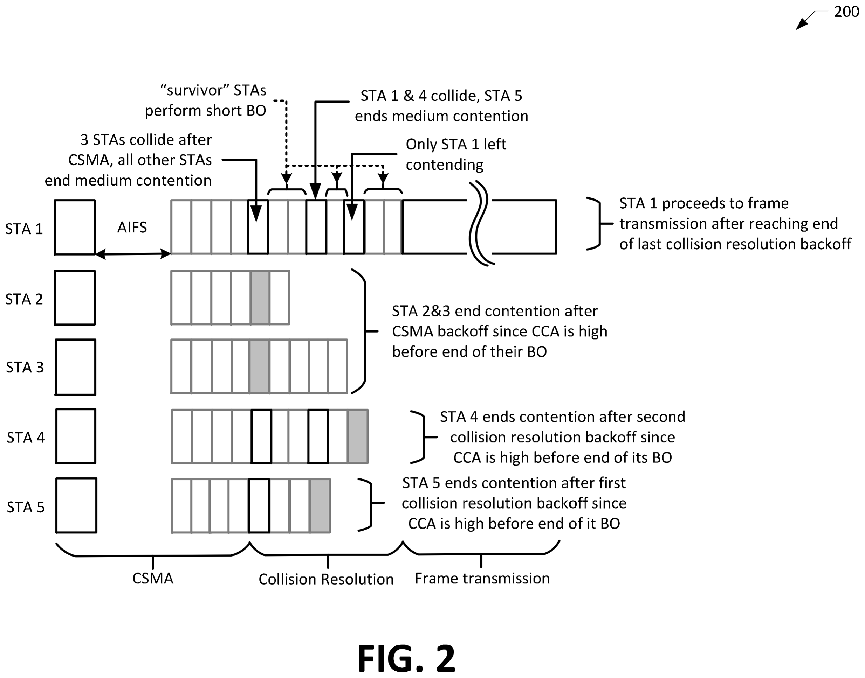

Figure 2 illustrates the scalable contention-based approach. This scheme supports up to several dozen low latency STAs, providing better scalability. However, this process requires multiple frame exchanges for collision resolution, introducing significant overhead. High contention levels in the network can lead to considerable delays due to the added signaling burden. As shown in Figure 2 by way of example, five stations designated STA1,...STA5, engage in CSMA and STAs 1, 4 and 5 collide after CSMA. The stations that do not collide, namely, STA2 and STA3, then end contention for the medium based on the clear channel assessment (CCA) of STA2 and STA3, which was high before the end of the backoff (BO) timer. STAs 1, 4 and 5 then engage in collision resolution, such as by utilizing BO timers. From this process, STAs 1 and 4 again collide while STA5 ends its contention for the medium since its CCA was high before the end of the BO timer. After further collision resolution using, for example, BO timers, STA1 prevails and proceeds to frame transmission, while STA 4 ends its contention for the medium since its CCA was high before the end of the BO timer.

Described herein are apparatuses, methods, and computer program products for STAs, described hereafter as low latency STAs although other types of STAs may also be utilized, to select the backoff counters in such a way that collisions are reduced or eliminated during the P-EDCA contention. For example, the backoff counter selection disclosed herein may improve the scalability of P-EDCA while reducing or minimizing overhead. This objective is achieved through an adaptive contention method that reduces the probability of collisions, while maintaining fair access to the channel and limiting overhead. In one embodiment, each low latency STA in communication with an AP obtains a distinct probability distribution for the backoff counter selection and then selects a slot based thereupon in a procedure called "slot selection." Slot selection defines several ways that contention slot selection probability distributions can be assigned to or selected by the STAs. These initially selected contention slots may then be transformed, such as by being permutated, to produce the final backoff counters for the low latency STAs, ensuring they are uniformly distributed within an interval, such as an interval [0, CW] that extends from 0 to the width (CW) of the contention window. By low latency STAs having distinct and individual slot selection probability distributions for the backoff counter selection, the likelihood of multiple low latency STAs selecting the same contention slot decreases, reducing collisions during P-EDCA contention. Furthermore, by permuting the contention slots selected by the STAs fairness is maintained ensuring equal access to the channel by STAs, while preventing recurring collisions. This approach preserves backward compatibility with EDCA procedures while meeting the fairness requirements of 802.11 channel access methods.

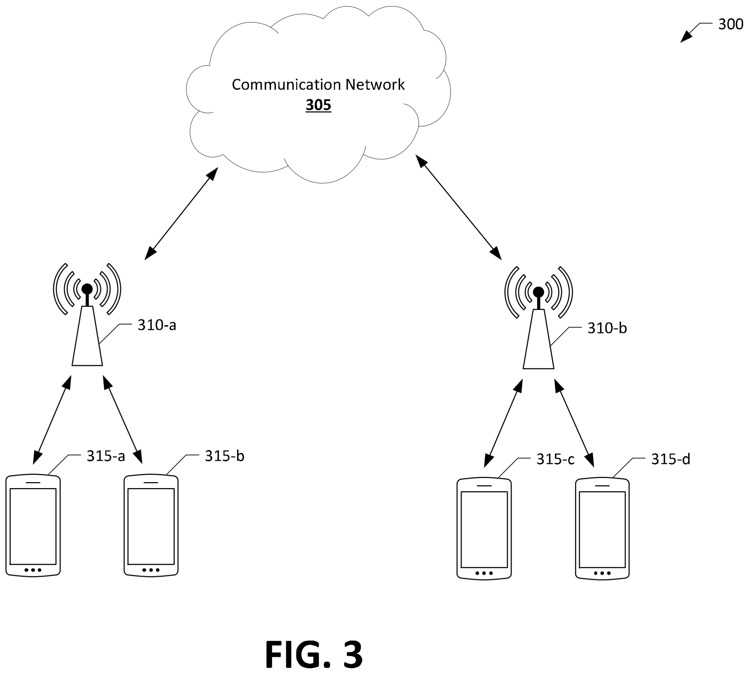

Referring now to Figure 3, an example communication system 300 is illustrated according to one or more embodiments of the present disclosure. The communication system 300 is a communication system to which one or more examples disclosed herein may be applied. The depiction of the communication system 300 in Figure 3 is not intended to limit or otherwise confine the example embodiment described and contemplated herein to any particular configuration of elements or systems, nor is it intended to exclude any alternative configurations or systems for the set of configurations and systems that can be used in connection with an example embodiment of the present disclosure. Rather, Figure 3, and the communication system 300 disclosed therein is merely presented to provide an example basis and context for the facilitation of some of the features, aspects, and uses of the methods, apparatuses, and computer program products disclosed and contemplated herein. It will be understood that while many of the aspects and components presented in Figure 3 are shown as discrete, separate elements, other configurations may be used in connection with the methods, apparatuses, and computer programs described herein, including configurations that combine, omit, and/or add aspects and/or components.

The communication system 300 includes a communication network 305, one or more access points (APs) 310 (e.g., an AP 310a and an AP 310-b), and one or more stations (STAs) 315 (e.g., STA 315-a, STA 315-b, STA 315-c, and STA 315-d). The communication system 300 is a type of network where at least one link is wireless, and provides voice, video, and/or data services to a plurality of devices. The communication network 305 may be a wireless communication network, a wireless local area network, a Wi-Fi network, or another type of communication network. The communication network 305 is illustrated as providing communication services to the one or more STA 315 via the one or more APs 310. The one or more STA 315 may be enabled for voice services, video services, data services, VR services, MR services, AR services, XR services, Internet of Things (IoT) services, and/or one or more other services. In some embodiments, the communication network 300 or components thereof can be configured to communicate with the one or more STA 315 and/or the one or more APs 310 over multiple different frequency bands, sub-bands thereof, and/or the like.

The one or more STAs 315 may be one or more client devices, such as one or more non-AP STAs, connected to the one or more APs 310. For example, the STA 315-a and the STA 315-b may be connected to the AP 310-a. Additionally, the STA 315-c and the STA 315-d may be connected to the AP 310-b. In some examples, the one or more APs 310 may be mobile access points (mAPs) with controlled network functionality. In such examples, a configuration comprising a mAP and a STA may be implemented based on Wi-Fi Direct or another type of network connection. In some examples, a device may simultaneously operate as a non-AP STA and as an AP. One such an example case is in a multi-AP network, which includes two or more devices that may act as APs and use Wi-Fi for the wireless backhaul connectivity based on a non-AP STA-AP connection model. In some examples, a device may simultaneously operate as part of a peer-to-peer connection based on Wi-Fi Direct or Wi-Fi Aware.

In some embodiments, communication between the one or more STAs 315 and the one or more APs 310 may provide the one or more STAs 315 access to the communication network 305 and/or may enable communication therewith. In some embodiments, the one or more APs 310 may provide wireless connectivity for the one or more STAs 315 according to the Wi-Fi standards, such as those that are a subset of the IEEE 802 family of standards. For example, the one or more APs 310 may provide wireless connectivity for the one or more STAs 315 according to the MAC and PHY specifications for Wi-Fi access points defined by IEEE 802.11 for transmitting and receiving data in frequency bands such as 2.4 GHz, 3.6 GHz, 5 GHz, 6 GHz, 60 GHz, and/or the like. The one or more APs 310 and the one or more STAs 315 may communicate through the transmission of frames, including data frames, beacon frames, management frames, and/or control frames, which may be transmitted in unicast messages, broadcast messages, or multicast messages. The 802.11 standards define an inter-frame space (IFS) as the nominal time (in microseconds (µs)) that the MAC and PHY use to receive the last symbol of a frame, process the frame, and respond with the first symbol of a response frame (e.g., the earliest possible response frame). In some embodiments, one or more STAs 315 may be configured to be in a wireless connection with at least one Wi-Fi AP (e.g., AP 310). It is to be appreciated that a Wi-Fi AP may be implemented by various entities and/or types of entities, for example, such as APs, mAPs, access nodes, nodes, hosts, servers, base stations, and/or other entities suitable for such usage.

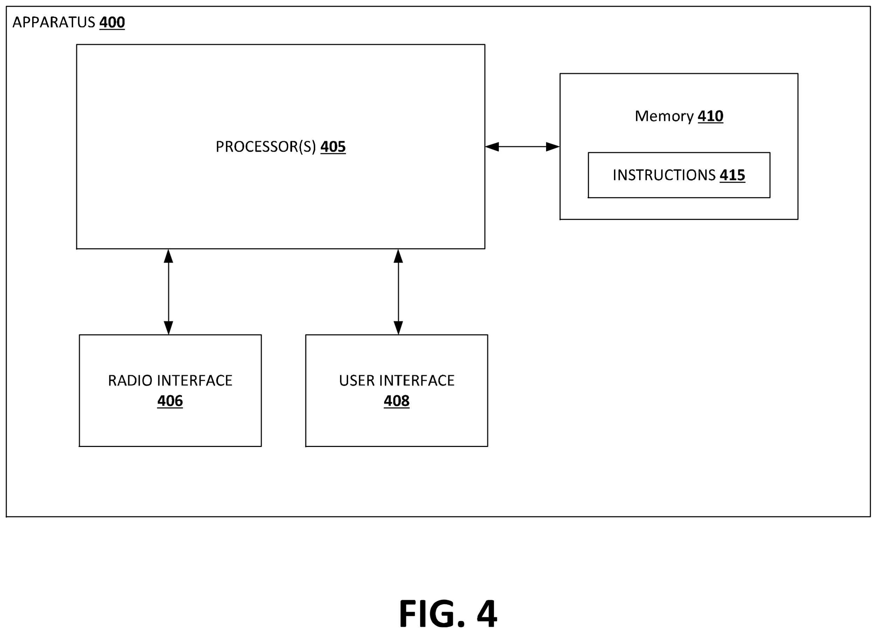

In some examples, the communication system 300 may support radio frequency sensing during IFS. In some examples, the communication system 300 may include a transceiver for transmitting and/or receiving signals. The transceiver may be implemented as a single integrated circuit (e.g., using a single application-specific integrated circuit (ASIC) or field-programmable gate array (FPGA)) or as a system-on-a-chip (SOC) that includes different modules for implementing the functionality of the transceiver. In some embodiments, the transceiver may include a processor and/or a memory (e.g., such as processor 405 and/or memory 410, further described with respect to Figure 4). The processor 405 may be used to execute instructions stored in the memory 410 and/or to store information in the memory 410, for example, such as the results of the executed instructions.

The one or more APs 310 may include transceivers for transmitting and/or receiving signals, for example, over a backbone and/or over an access interface. A transceiver may be implemented as a single integrated circuit (e.g., using a single ASIC or FPGA) or as a SOC that includes different modules for implementing the functionality of the transceiver. In some embodiments, the transceiver of an AP 310 may include a processor and/or a memory (e.g., such as processor 405 and/or memory 410, further described with respect to Figure 2).

An STA of the one or more STAs 315 may be a client device such as, for example, a client-side user device, a non-AP STA, user equipment (UE), and/or another type of entity configured to communicate with the one or more APs 310. A UE may be a mobile terminal, such as a mobile phone, a smartphone, a pager, a mobile television, a gaming device, a laptop computer, a computer with a mobile broadband adapter, a camera, a tablet computer, a portable digital assistant (PDA), a communicator, pad, a wearable device, a headset, a touch surface, a video recorder, an audio/video player, radio, an electronic book, a positioning device (e.g., global positioning system (GPS) device), a virtual reality device, an augmented reality device, or any combination of the aforementioned. In some embodiments, an AP 310 may include a processor and/or a memory (e.g., such as processor 405 and/or memory 410, further described with respect to Figure 4).

In some embodiments, the communication system 300 may support latency-sensitive applications at Wi-Fi devices such as the one or more APs 310 and the one or more STAs 315. Such latency-sensitive applications may include virtual reality applications, mixed reality applications, augmented reality applications, and extended reality applications.

In one or more embodiments, an EDCA procedure for prioritized data traffic associated with the communication system 300 and/or the communication network 305 may be enabled by employing an apparatus 400 as depicted in Figure 4. The apparatus 400 may be embodied by and/or incorporated into an AP (e.g., the one or more APs 310), an STA (e.g., the one or more STAs 315), and/or another device discussed with respect to Figure 3.

Regardless of the manner in which the apparatus 400 is embodied, the apparatus 400 includes, is associated with, and/or is in communication with: at least one processor 405, at least one memory 410, and a communication interface 415. In one or more embodiments, the apparatus 400 comprises, for example, the at least one processor 405 and the at least one memory 410 storing instructions 415 that, when executed by the at least one processor 405, cause the apparatus 400 at least to perform the method or methods as disclosed herein, and any of the embodiments thereof. In an example, the at least one memory 410 and the instructions 415 (e.g., a computer program code, software), are configured, with the at least one processor 405, to cause the apparatus 400 to perform the method or methods as disclosed herein, and any of the embodiments thereof.

In some embodiments, the processor 405 may be in communication with the memory 410 via a bus for passing information among components of the apparatus 400. The memory 410 may be non-transitory and may include, for example, one or more volatile and/or non-volatile memories. In other words, for example, the memory 410 may be an electronic storage device (e.g., a computer readable storage medium) comprising gates configured to store data (e.g., bits) that may be retrievable by a machine (e.g., a computing device like the processor). The memory 410 may be configured to store information, data, content, applications, instructions, or the like for enabling the apparatus to carry out various functions in accordance with an example embodiment of the present disclosure. For example, the memory 410 could be configured to buffer input data for processing by the processor. Additionally or alternatively, the memory 410 may be configured to store instructions for execution by the processor 405.

The processor 405 may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a user equipment, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The memory 410 may be implemented using any suitable data storage technology. The memory may comprise a database for storing data. The memory 410 may be at least in part external to apparatus 400 but accessible to apparatus 400.

The instructions 415 may be comprised in a computer readable medium or a non-transitory computer readable medium. A term non-transitory, as used herein, is a limitation of the medium itself (e.g., tangible, not a signal) as opposed to a limitation on data storage persistency (e.g., random access memory, RAM, vs. read only memory, ROM).

The apparatus 400 comprises a radio interface 406. The radio interface 406 may provide the apparatus 400 with communication capabilities. The radio interface 406 may comprise a receiver configured to receive information in accordance with at least one cellular or non-cellular standard. The radio interface 406 may comprise a transmitter configured to transmit information in accordance with at least one cellular or non-cellular standard. The receiver may comprise more than one receiver. The transmitter may comprise more than one transmitter. The radio interface 406 may comprise a transceiver configured to receive and transmit information in accordance with at least one cellular or non-cellular standard. The transceiver may comprise more than one transceiver.

The apparatus 400 may optionally comprise a user interface 408 comprising, for example, at least one of a keypad, a microphone, a touch display, a display, a speaker, etc. The user interface 408 may be used to control the apparatus by the user. The user interface 408 may be external to the apparatus 400. For example, the apparatus 400 may be connected to another device, such as a computer, either via wireless or wired connection, and the apparatus 400 is controlled by the user via the computer.

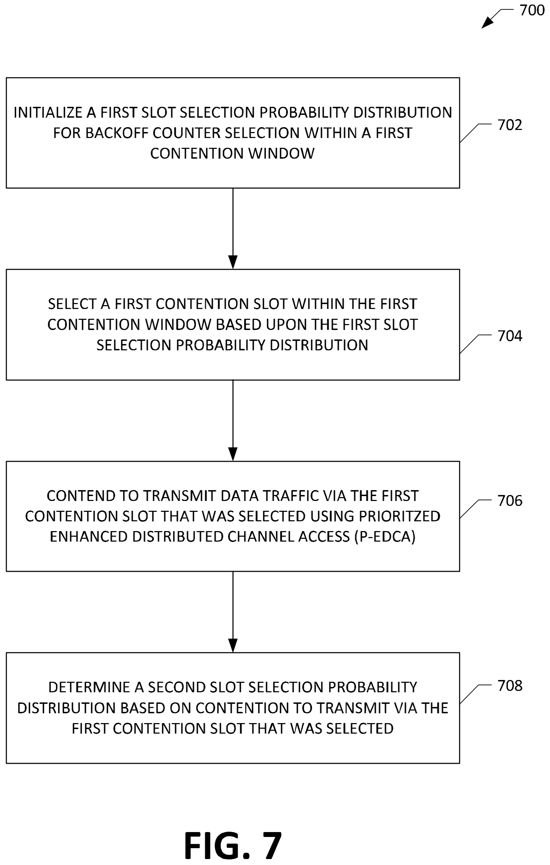

The apparatus 400 may be embodied by or otherwise associated with a station, e.g., a user equipment or other client device. In another embodiment, the apparatus is comprised in such a station, e.g. as a chipset configured to control the station. The apparatus 400 embodied by or otherwise associated with a station may be caused or configured to perform at least the method of Figure 7, and/or any one or more of the embodiments described.

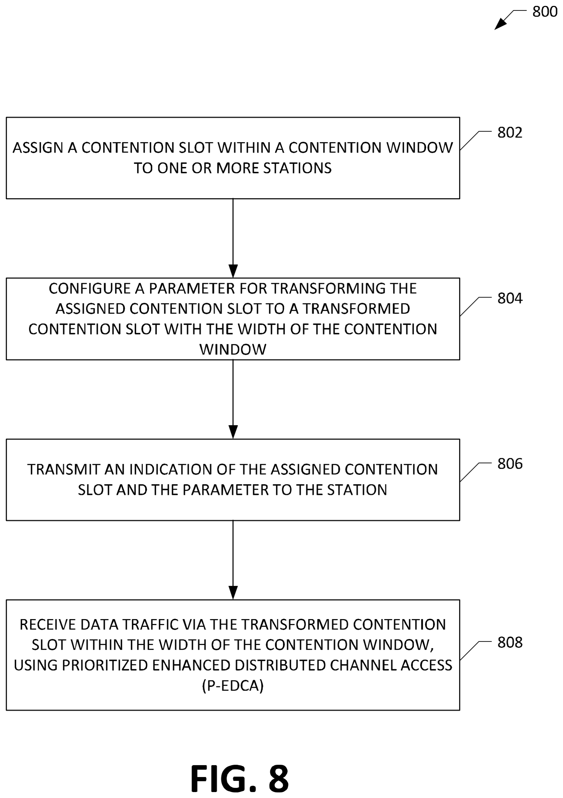

Alternatively, the apparatus 400 may be embodied by or otherwise associated with an access point. As another example, the apparatus is comprised in such an access point, e.g. as a chipset configured to control the access point. The apparatus 400 embodied by or otherwise associated with an access point may be caused or configured to perform at least the method of Figure 8, and/or any one or more of the embodiments described.

In an embodiment, at least some of the processes described herein may be carried out by an apparatus comprising means for carrying out at least some of the described processes. Means for performing method steps as disclosed herein may include software and/or hardware components of the apparatus 400. For example, the at least one processor 405, the memory 410, and instructions, such as for example the computer program code form means for carrying out the method or methods as disclosed herein, and any of the embodiments thereof. As used herein the term "means" is to be construed in singular form, e.g., referring to a single element, or in plural form, e.g., referring to a combination of single elements. Therefore, terminology "means for [performing A, B, C]", is to be interpreted to cover an apparatus in which there is only one means for performing A, B and C, or where there are separate means for performing A, B and C, or partially or fully overlapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C.

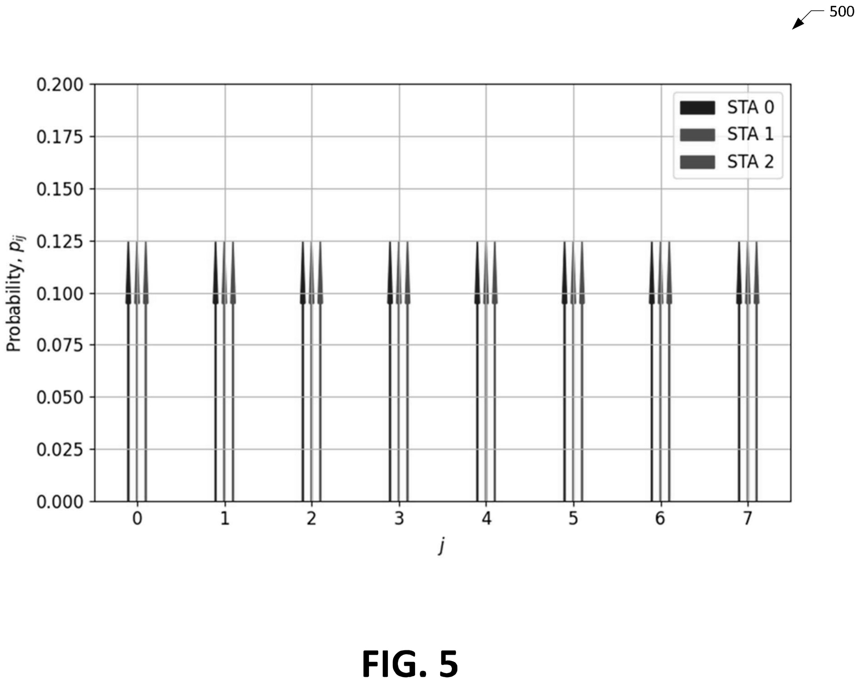

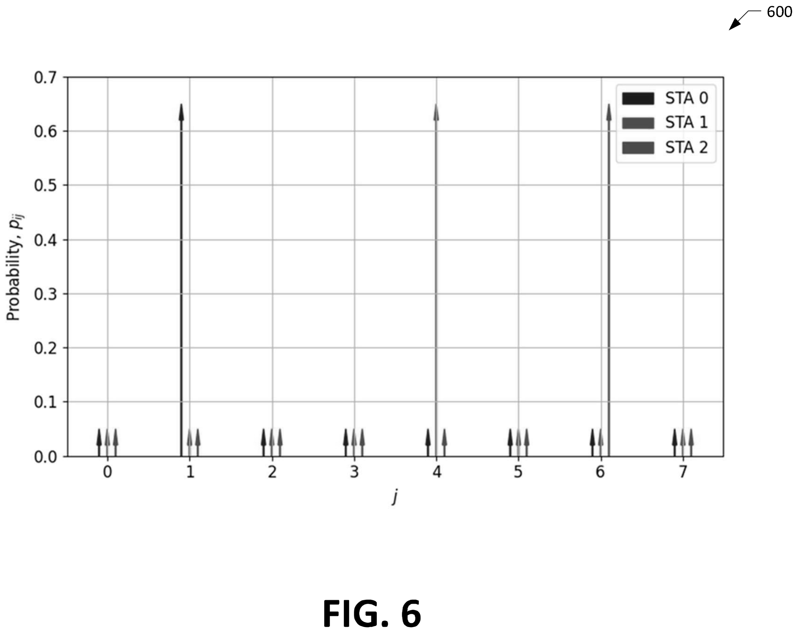

P-EDCA is defined in such a way that after sending data traffic during a TXoP the channel becomes idle and the eligible STA sends a DS. After the DS transmission is finished a respective STA has to select a new backoff counter from the same range [0, CW]. Each STA then contends to transmit a data signal during the TXoP by counting down the backoff counter until the backoff counter reaches zero, at which time the STA attempts to transmit the data signal unless some other STA is already utilizing the TxOP. In other words, a P-EDCA procedure is initialized by a DS, after which, each STA that has sent the DS selects a contention slot based on the backoff counter, and the STA with the earliest contention slot gains access to the TXoP and is able to transmit. All other STAs repeat this procedure once the STA with the earliest contention slot finishes its transmission within the TxOP. Therefore, the backoff counter selection enables different low latency STAs to select distinct contention slots for P-EDCA contention, thereby reducing the likelihood of collisions. This reduction in collision likelihood is illustrated by comparison of Figures 5 and 6, which depict the impact of the selection process on the distribution of the backoff counters (and the contention slots respectively) for P-EDCA contention.

Figure 5 illustrates a legacy slot selection probability distribution 500 where all slot selection probabilities are equal. The probability of STAs 0, 1, and 2 choosing any of the possible contention slots in the contention window is the same per slot and per STA. Therefore, the probability that two or more STAs select the same slot is relatively high, and the probability that a collision occurs is relatively high.

Figure 6 illustrates the probability of STAs 0, 1, and 2 selecting different possible contention slots within the contention window according to one or more embodiments of the present disclosure. In some embodiments, the assignment of contention slots is performed in a distributed manner, wherein each STA with low latency data traffic randomly selects a contention slot in accordance with a slot selection probability distribution 600 as described below. In some embodiments, as illustrated in Figure 6, the slot selection probabilities produced during slot selection are skewed between the STAs. As a result, each STA has a relatively high probability of choosing a different slot from the others, and the probability of collisions is significantly reduced relative to that depicted in Figure 5.

In order to provide different probabilities for the stations to select the various contention slots, a slot selection probability distribution is defined in one embodiment, such as shown in Figure 6. The slot selection probability distribution may be defined by a station or by an access point and enables a probabilistic approach to slot selection. The probability distribution defines the likelihood of backoff counter selection for a respective station within the contention window. Based on the probability distribution, the respective station can select a backoff counter and, in turn, a contention slot that is identified by the backoff counter within the contention window that is more likely distinct from the contention slots selected by other stations for which the slot selection is governed by different slot selection probability distributions.

In some embodiments, the slot selection probability distribution is initially defined by and then dynamically adjusted by the STA over time, such as following transmission by the STA during a previously selected slot. In some embodiments, the STA dynamically adjusts the slot selection probability distribution based on contention events. For example, the slot selection probability distribution may be adjusted based on prior attempts to access the channel. In some embodiments, the contention event is a collision between competing transmissions within the same contention slot, which causes the slot selection probability within the contention window to decrease. In some embodiments, the contention event is the successful transmission, which causes the slot selection probability within the contention window to increase. In some embodiments, the slot selection probability distribution is adjusted based on the reception of acknowledgments (ACK) associated with a prior transmission, which causes the slot selection probability within the contention window to increase. In some embodiments, the slot selection probability distribution is adjusted based on the negative acknowledgements (NACK) associated with a prior transmission, which causes the slot selection probability within the contention window to decrease. In some embodiments, each time a STA participates in contention, the STA selects the contention slot from the most recently updated probability distribution, such as a distribution that was dynamically adjusted based on the previous transmission.

In some embodiments, the probability of choosing each contention slot is dynamically changed over time based on the following algorithm. In this embodiment, a probability distribution p_{i,j} is defined, such as by a STA or by an AP in communication with the STA. For example,*pᵢⱼ =* P(*STA* = *i, CS = j*) is the probability that station *i* selects a contention slot (CS) *j.* In addition, Δ is the stepwise change in probability for the "probed" contention slot, that is, the contention slot used by the STA for communication with the AP. In this embodiment, the probability distribution is initialized as *pᵢⱼ = p*₀ *=* 1/(*CW +* 1) and then a contention slot is selected as CS ~ {{0,1, *..., CW*} with respective probabilities {*p*_{*i*0}, *p*_{*i*1}, ..., *P_{i,CW}*}} If *STAᵢ* detects a collision when *CS = j*, then the probability of *STAᵢ* choosing slot j may be adjusted, such as by the STA, as follows: ${p}_{ij} = {p}_{ij} - min \left({p}_{ij}, Δ\right)$ and the probability of *STAᵢ* choosing any other slot *k ≠* j may be updated to: ${p}_{ik} = {p}_{ik} + \frac{1}{CW} min \left(Δ, {p}_{ij}\right)$

In this regard, the probabilities should be updated in the order listed, since *pᵢₖ* depends on the updated value of *pᵢⱼ.* If, however, *STAᵢ* can successfully transmit when choosing slot j, then the probability of *STAᵢ* choosing slot j may be updated, such as by the STA, to: ${p}_{ij} = {p}_{ij} + min \left(Δ, {\sum }_{k \neq j} min \left(\frac{Δ}{\left(CW\right)}, {p}_{ik}\right)\right)$ and the probability of *STAᵢ* choosing any other slot *k* ≠ *j* may updated to: ${p}_{ik} = {p}_{ik} - min \left(\frac{Δ}{\left(CW\right)}, {p}_{ik}\right) , ∀ k \neq j$

As before, the probabilities should be updated in the order listed, since *pᵢⱼ* depends on the updated value of *pᵢₖ.* If requested by the AP, all slot probabilities may be set to the same value that may be defined as: ${p}_{ik} = \frac{1}{CW + 1} , ∀ k$

In some embodiments, the STA may reinitialize the slot selection probability distribution. For example, reinitialization may occur upon the successful decoding of a low latency data traffic transmission by the receiver followed by the reception of an ACK by the STA. In some embodiments, the STA may reinitialize the slot selection probability distribution if the STA does not contend continuously. In some embodiments, the STA may reinitialize the slot selection probability distribution in response to a significant state change. In some embodiments, a significant state change may be a predefined state change and may include at least one of reassociation of the STA, roaming of the STA, a change in operational mode of the STA, or a specific request from the AP.

In some embodiments, contention slot probabilities are initialized such that they have an equal chance of being chosen. As noted before, the STA may adjust slot selection probabilities based on the success or failure of the previous transmission. For example, in an instance in which the transmission is successful, the STA may increase the slot selection probability of the slot on which the transmission was sent and decrease the slot selection probabilities of the other contention slots. Further, in an instance in which the transmission failed, the STA may decrease the slot selection probability of the slot on which the transmission was sent and increase the slot selection probabilities of the other contention slots.

In another embodiment, the probability of choosing each contention slot may be dynamically changed over time according to the following algorithm in which upon successful transmission for slot j: the probability distribution p_{i,j} is redefined as *pᵢⱼ = pᵢⱼ + β*.

However, upon failure of transmission for slot j, the probability distribution is redefined as *pᵢⱼ = pᵢⱼ* * (1 - *α*). In both cases, the STA also renormalizes to ensure that all slot probabilities sum to 1 by either defining: ${p}_{ik} = \frac{exp \left({p}_{ik}\right)}{{\sum }_{l = 0}^{CW} exp \left({p}_{il}\right)} , ∀ k$ or ${p}_{ik} = \frac{{p}_{ik}}{{\sum }_{l = 0}^{CW} {p}_{il}} , ∀ k$

In some embodiments, the adjustment parameters, such as α, β and Δ, may be predefined or configurable by the AP. In some embodiments, the slot probability parameters may be selected by the STA. In some embodiments, a STA's decision to update its slot selection probabilities following an unsuccessful transmission during P-EDCA is governed by an additional probabilistic mechanism involving an updated probability.

In this regard, a STA may update the slot selection probabilities based on an updated probability, such as a predefined update probability, that differs between STAs. In some embodiments, the updated probability introduces controlled randomness into the process of decreasing the likelihood of a slot selection after a collision. This process prohibits all colliding STAs from uniformly reducing their preference for the contested slot since the STAs' uniform reduction in their preference for the contested slot would cause inefficient slot reassignment. By updating the probability differently from STA to STA, STAs retain their preference for the contested slot, albeit in a different manner than other stations, allowing the system to converge more efficiently toward a collision-free distribution of contention slots.

In some embodiments, the contention slot that is selected may also be transformed, such as by being permutated as described below. The permutation may be performed by the STA as described below or alternatively by the AP.

Figure 7 illustrates a flowchart depicting a method 700 performed by a STA in one embodiment and Figure 8 illustrates a flowchart depicting a method 800 performed by an AP in another embodiment according to one or more example embodiments of the present disclosure. It will be understood that each block of the flowcharts and combination of blocks in the flowcharts can be implemented by various means, such as hardware, firmware, processor, circuitry, and/or other communication devices associated with execution of software including instructions, for example one or more computer program instructions. For example, one or more of the procedures described above can be embodied by computer program instructions. In this regard, the computer program instructions which embody the procedures described above can be stored, for example, by the memory 410 of the apparatus 400 employing an embodiment of the present disclosure and executed by the processor 405. As will be appreciated, any such computer program instructions can be loaded onto a computer or other programmable apparatus (for example, hardware) to produce a machine, such that the resulting computer or other programmable apparatus implements the functions specified in the flowchart blocks. These computer program instructions can also be stored in a computer-readable memory that can direct a computer or other programmable apparatus to function in a particular manner, such that the instructions stored in the computer-readable memory produce an article of manufacture the execution of which implements the function specified in the flowchart blocks. The computer program instructions can also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

Referring now to Figure 7, the operations performed, such as by the apparatus 400 of Figure 4, are illustrated in order to enable different low latency STAs to select distinct contention slots for P-EDCA contention, thereby reducing the likelihood of collisions. In some embodiments, the method 700 is associated with functionality of the STA 815 or another STA. As shown in block 702 of Figure 7, the apparatus 400 includes means, such as the processor 405, or the like, configured to initialize a first slot selection probability distribution for backoff counter selection within a first contention window. At block 704, of Figure 7, the apparatus 400 includes means, such as the processor 405, or the like, configured to select a contention slot within the first contention window based upon the first slot selection probability distribution. At block 706, of Figure 7, the apparatus 400 includes means, such as the processor 405, the radio interface 406, or the like, configured to contend to transmit data traffic via the contention slot that was selected using prioritized enhanced distributed channel access (P-EDCA). At block 708, of Figure 7, the apparatus 400 includes means, such as the processor 405, or the like, configured to dynamically determine a second slot selection probability distribution following contention to transmit via the contention slot that was selected.

Referring now to Figure 8, the operations performed, such as by the apparatus 400 of Figure 4, are illustrated in order to enable a backoff counter selection for prioritized EDCA contention for prioritized data traffic of a communication network, in accordance with another embodiment of the present disclosure. In some embodiments, the method 800 is associated with functionality of the AP or another AP. As shown in block 802 of Figure 8, the apparatus 400 includes means, such as the processor 405, or the like, configured to assign a contention slot within a contention window to one ore more stations. The AP can select slots for the STAs in this embodiment in various manners. In some embodiments, the slot assignment is performed statically. However, in other embodiments, the slot assignment is performed semi-statically through communication between the STA and the AP. As such, once the AP has assigned a contention slot to a STA, the AP transmits the assigned contention slot to the STA and the STA then transmits data traffic, such as low latency data traffic, using the contention slot until the STA obtains an updated contention slot from the AP. In some embodiments, the AP may assign a contention slot to the STA within a stream classification service (SCS), mirrored stream classification service (MSCS), or traffic specification (TSPEC) setup procedure corresponding to the low latency data traffic of the STA. In some embodiments, the AP is a remote service.

The assigned contention slot may be fixed within the interval [0, CW]. In some embodiments, the value of CW is dynamically configurable by the AP based on network conditions that define the size of the CW. Various network conditions may be considered in sizing the CW including at least one of: bandwidth availability, latency, packet loss, signal strength, overall connectivity, or the number of STAs or APs sharing the same channel. In some embodiments, contention slots may be assigned by an AP in various manners including being assigned as a function of the STA's Association Identifier (AID), the media access control (MAC) address of the STA, or another uniquely identifiable parameter associated with the STA. By using one or more unique parameters, the likelihood of assigning different contention slots to the STAs is increased.

As shown in block 804 of Figure 8, the apparatus 400 includes means, such as the processor 405, or the like, to configure a parameter, such as one or more initialization parameters as described below, for transforming the assigned contention slot to a transformed contention slot with the width of the contention window. As shown in block 806, the apparatus 400 also includes means, such as the processor 405, the radio interface 406 or the like, for transmitting the assigned transmission slot and the parameter(s) to be used for transformation of the assigned contention slot to the respective STA.

In some embodiments, the assigned contention slot may be transformed, such as by being permutated, prior to use by the STA. In some embodiments, permutation of the contention slot may be based on a permutation operator. The permutation operator may include a pseudorandom permutation operator. In some embodiments, the initialization parameters of the pseudorandom permutation operator are shared among all STAs. For example, the AP may broadcast the initialization parameters of the pseudorandom permutation operator to the STA. In other embodiments, the initialization parameters of the pseudorandom permutation operator may be derived by the AP or the STA from previous low latency data traffic and/or from the duration of the previous transmission opportunity. In other embodiments, the initialization parameters are derived, such as by the AP or the STA, from the length of the previous PHY protocol data unit, such as may be measured in bits or bytes.

In yet other embodiments, the permutation operator is derived from a timing synchronization function (TSF) time value known by all STAs within a BSS. For example, given a TSF timer with value T and a slot index *xᵢ* selected by the STA according to any of the embodiments previously described, the contention slot, *CSᵢ,* for STA*i* may be determined using the following set of transformations: $A = T mod \left(CW+1\right)$ $B = \left(T div \left(CW+1\right)\right) mod \left(CW+1\right)$ ${CS}_{i} = \left(A⋅{x}_{i}+B\right) mod \left(CW+1\right)$ In the foregoing, x *mod y* is the remainder operation, and *x div* y is the integer division operation.

In some embodiments, the permutation operator is a function of the TSF timer value. For example, the function of the TSF timer value may be a linear transformation of the TSF timer value using parameters advertised or broadcast by the AP. In other embodiments, the function of the TSF timer value is a linear transformation of the TSF timer value based on the parameters of the transmission opportunity, such as the duration of the transmission opportunity, such as in milliseconds. In some embodiments, the STAs update their TSF values upon receiving a beacon transmission from an AP. To mitigate clock drift among STAs, the TSF timer value may be converted from microseconds into milliseconds. In some embodiments, the integer value of the TSF timer value following conversion into milliseconds is used as a permutation operator, such as a permutation initialization parameter. In some embodiments, STAs use a common synchronized clock reference via the timing measurement and fine timing measurement procedures.

In other embodiments, the permutation operator is derived from one or more of a slot index, a parameter of a transmission opportunity, a parameter of a physical layer (PHY) protocol data unit (PPDU) or a common synchronized clock reference available via a timing measurement and fine timing measurement. As noted above, the parameter of the transmission opportunity may be the duration of the transmission opportunity, such as in milliseconds. As another example, the parameter of a previous PPDU may be the length of the previous PPDU, such as measured in bits or bytes.

In some embodiments, permutation of the contention slot comprises at least one of the following properties: fair channel access, unique slot assignment, and distributed execution. Fair channel access allows for all contending STAs to have equal opportunity to access the channel during P-EDCA. Unique slot assignment ensures that if the number of contending STAs is smaller than the number of contention slots, each STA should be assigned a unique slot. Distributed execution provides for slot permutation to be performed locally at each STA. In other embodiments, however, slot permutation is performed by the AP.

As shown in block 808 of Figure 8, the apparatus 400 includes means, such as the processor 405, or the like, configured to receive data traffic via the transformed contention slot within the width of the contention window, using prioritized enhanced distributed channel access (P-EDCA).

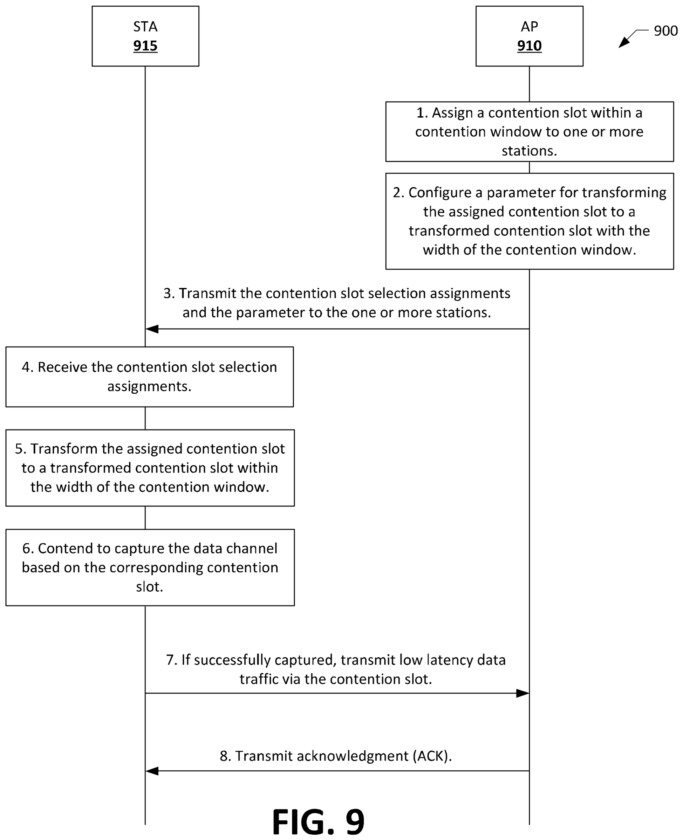

Figure 9 illustrates example signaling 900 between STA 915 and AP 910 for enabling a backoff counter selection for prioritized EDCA contention for prioritized data traffic associated with a communication network (e.g., the communication network 105), according to one or more embodiments. The example signaling enables the STA 915 to transmit prioritized data traffic via a data channel of the communication network within a channel access window associated with the data channel. In some embodiments, the channel access window may be an enhanced version of a contention window that is defined for the data channel according to IEEE 802.11.

As shown in the embodiment of Figure 9, the AP 910, assigns a contention slot within a contention window to one or more stations, at 1, such as described above in relation to Figure 8. The AP 910 configures a parameter for transforming the assigned contention slot to a transformed contention slot with the width of the contention window, at 2. The AP 910 of this embodiment then transmits the contention slot selection assignments and the parameter(s) to the one or more stations 915, at 3, and the stations 915, receive the contention slot selection assignments and the parameter(s), at 4. The stations 915 then transform the assigned contention slot to a transformed contention slot within the width of the contention window, at 5. The stations 915 then contend to capture the data channel based on the corresponding contention slot selection, at 6, and, if successfully captured, the stations 915 then transmit low latency data traffic via the selected contention slot, at 7. In some embodiments, the AP 910 then transmits a receipt of acknowledgment (ACK), at 8. As such, contention slots may be assigned to stations in a manner that reduces the likelihood of collisions and without incurring significant signaling overhead.

As described above, Figures 7 and 8 are flowcharts of various methods that can be carried out by, e.g., the apparatus 400, and/or according to a computer program product, according to an example embodiment of the disclosure. A computer program product is therefore defined in those instances in which the computer program instructions, such as computer-readable program code portions, are stored by at least one non-transitory computer-readable storage medium with the computer program instructions, such as the computer-readable program code portions, being configured, upon execution, to perform the functions described above, such as, e.g., in conjunction with the flowcharts of Figures 7 and 8, as part of the communication system of Figure 3, and/or as part of the signaling diagram of Figure 9.

Accordingly, blocks of the flowcharts support combinations of means for performing the specified functions and combinations of operations for performing the specified functions. It will also be understood that one or more blocks of the flowcharts, and combinations of blocks in the flowcharts, may be implemented by special purpose hardware-based computer systems which perform the specified functions, or combinations of special purpose hardware and computer instructions.

In other embodiments, the computer program instructions, such as the computer-readable program code portions, need not be stored or otherwise embodied by a non-transitory computer-readable storage medium, but may, instead, be embodied by a transitory medium with the computer program instructions, such as the computer-readable program code portions, still being configured, upon execution, to perform the functions described above.

In some embodiments, certain ones of the operations above may be modified or further amplified. Furthermore, in some embodiments, additional optional operations may be included. Modifications, additions, or amplifications to the operations above may be performed in any order and in any combination.

Many modifications and other embodiments of the disclosure set forth herein will come to mind to one skilled in the art to which this disclosure pertains having the benefit of the teachings presented in the foregoing descriptions and the associated drawings. Therefore, it is to be understood that the disclosure is not to be limited to the specific embodiments presented herein and that modifications and other embodiments are intended to be included within the scope of the appended claims. Although specific terms are employed herein, they are used in a generic and descriptive sense only and not for purposes of limitation.

## Claims

1. An apparatus comprising:
at least one processor; and
at least one memory storing instructions that, when executed by the at least one processor, cause the apparatus to:
initialize a first slot selection probability distribution for backoff counter selection within a first contention window;
select a first contention slot within the first contention window based upon the first slot selection probability distribution;
contend to transmit data traffic via the first contention slot that was selected using prioritized enhanced distributed channel access (P-EDCA); and
determine a second slot selection probability distribution based on contention to transmit via the first contention slot that was selected.

2. The apparatus of claim 1, wherein the apparatus is further caused to:
select a second contention slot within the second contention window based upon the second slot selection probability distribution; and
contend to transmit data traffic via the second contention slot that was selected using P-EDCA.

3. The apparatus of claim 1, further configured to initialize the first slot selection probability distribution across a width (CW) of the first contention window.

4. The apparatus of claim 3, wherein the apparatus is caused to initialize the first slot selection probability distribution in response to at least one of:
receiving an acknowledgement by the apparatus;
failure to contend continuously;
a response to a state change including at least one of a reassociation, roaming, a change in operational mode; or
a request from a second apparatus.

5. The apparatus of claim 1, wherein the second slot selection probability distribution comprises:
in an instance in which contention was successful and data traffic was transmitted via the selected contention slot, the second slot selection probability of the selected contention slot within a second contention window is increased, and the selection probability of other contention slots within the second contention window is decreased; and
in an instance in which contention failed and data traffic was not transmitted via the selected contention slot, the second selection probability of the selected contention slot within a second contention window is decreased, and the selection probability of other contention slot within the second contention window is increased.

6. The apparatus of claim 5, wherein the second probability distribution for slot j in which contention was successful is determined as: ${p}_{ij} = {p}_{ij} + min \left(Δ, {\sum }_{k \neq j} min \left(\frac{Δ}{\left(CW\right)}, {p}_{ik}\right)\right)$

7. The apparatus of claim 5, wherein the second probability distribution for slot j in which contention failed is determined as: *pᵢⱼ* = *pᵢⱼ* - min(*pᵢⱼ* , Δ).

8. The apparatus of claim 7, wherein the second probability distribution in which contention failed is determined based on a predefined update probability to decrease the second selection probability of the selected contention slot within the second contention window.

9. The apparatus of claim 5, wherein the second slot selection probability distribution is adjusted based on contention parameters.

10. The apparatus of claim 9, wherein the contention parameters are at least one of a predefined value or a value configured by the second apparatus.

11. The apparatus of claim 5, wherein the second probability distribution in which contention was successful is determined as: *pᵢⱼ* = *pᵢⱼ* + *β* and wherein the second probability distribution in which contention failed is determined as: *pᵢⱼ* = *pᵢⱼ* * (1 - *α*)_{.}

12. The apparatus of claim 1, wherein the apparatus is further configured to adjust the slot selection probability distribution such that a probability to select the contention slot is dynamically changed over time in accordance with a first predefined relationship in response to a successful contention to transmit the data traffic via the contention slot that was selected and in accordance with a second predefined relationship, different than the first predefined relationship, in response to an unsuccessful contention to transmit the data traffic via the contention slot that was selected.

13. The apparatus of claim 1, further configured to apply a permutation to contention slots within a contention window.

14. The apparatus of claim 13, wherein the permutation to the contention slots with a contention window is based on an initialization parameter.

15. The apparatus of claim 14, wherein the initialization parameter comprises at least one of a parameter broadcasted by an access point, a duration of a transmission opportunity, or a length of a PHY protocol data unit.
Initialized across the first contention window.
